# EUROPÄISCHE PATENTSCHRIFT

(11) **EP 1 745 197 B1**
(45) Veröffentlichungstag und Bekanntmachung des Hinweises auf die Patenterteilung: **07.08.2019**
(21) Anmeldenummer: 05729623.8
(22) Anmeldetag: 01.04.2005
(51) Int. Cl.: F01N 3/20, G01L 27/02, B01D 53/90, B01D 53/94

(54) **VERFAHREN ZUM EINBRINGEN EINES REAGENZMITTELS IN EINEN ABGASKANAL EINER BRENNKRAFTMASCHINE**
METHOD FOR INTRODUCING A REAGENT INTO AN EXHAUST GAS CHANNEL OF AN INTERNAL COMBUSTION ENGINE
PROCEDE POUR INTRODUIRE UNE SUBSTANCE REACTIVE DANS UN CONDUIT DE GAZ D'ECHAPPEMENT D'UN MOTEUR A COMBUSTION INTERNE

(30) Priorität: 05.05.2004 DE 102004022115
(43) Veröffentlichungstag der Anmeldung: 24.01.2007
(73) Patentinhaber: ROBERT BOSCH GMBH, 70442 Stuttgart (DE)
(72) Erfinder: GERLACH, Michael, 71336 Waiblingen-Neustadt (DE)
(86) Internationale Anmeldenummer: PCT/EP2005/051479
(87) Internationale Veröffentlichungsnummer: WO 2005/108753

(56) Entgegenhaltungen:
- WO-A-02/101209
- DE-A1- 10 139 142
- US-A- 6 038 912
- US-A1- 2002 035 866
- US-B1- 6 273 120

## Beschreibung

### Stand der Technik

Die Erfindung geht aus von einem Verfahren zum Einbringen eines Reagenzmittels in einen Abgaskanal einer Brennkraftmaschine.

In der DE 101 39 142 A1 ist eine Abgasbehandlungsvorrichtung einer Brennkraftmaschine beschrieben, bei der zur Verringerung der NOx-Emissionen ein SCR-Katalysator (Selektiv-Catalytic-Reduction) eingesetzt ist, der die im Abgas enthaltenen Stickoxide mit dem Reduktionsmittel Ammoniak zu Stickstoff reduziert. Das Ammoniak wird in einem stromaufwärts des SCR-Katalysators angeordneten Hydrolyse-Katalysator aus einer Harnstoff-Wasser-Lösung gewonnen. Der Hydrolyse-Katalysator setzt den in der Harnstoff-Wasser-Lösung enthaltenen Harnstoff mit Wasser zu Ammoniak und Kohlendioxid um. Zur Sicherstellung einer exakten Dosierung ist vorgesehen, die Konzentration der Harnstoff-Wasser-Lösung zu ermitteln.

Die Harnstoff-Wasser-Lösung wird mit einer Pumpe auf einen vorgegebenen Druck gebracht. Ein Dosierventil legt einen vorgegebenen Durchfluss fest. In einer Mischkammer wird der Harnstoff-Wasser-Lösung Druckluft zugemischt. Die Harnstoff-Wasser-Lösung wird zusammen mit der zugemischten Luft in das Abgas der Brennkraftmaschine derart eingesprüht, dass eine weitgehend gleichmäßige Anströmung des SCR-Katalysators erreicht wird.

In einer nicht vorveröffentlichten Patentanmeldung der Anmelderin sind ein gattungsgemäßes Verfahren und eine gattungsgemäße Vorrichtung beschrieben, bei denen ebenfalls ein unter Druck stehendes Reagenzmittel in das Abgas einer Brennkraftmaschine vor einen SCR-Katalysator eingesprüht wird. Der Reagenzmitteldruck wird in Abhängigkeit von einer Kenngröße auf einen vorgegebenen Reagenzmittel-Solldruck festgelegt. Als Kenngröße kann eine Betriebsgröße der Brennkraftmaschine und/oder eine Kenngröße des Abgases der Brennkraftmaschine herangezogen werden. Der vorgegebene Reagenzmitteldruck-Sollwert wird im Rahmen einer Regelung geregelt, bei welcher der Reagenzmittel-Istdruck von einem Reagenzmittel-Drucksensor erfasst wird. Dem Reagenzmittel kann Druckluft zugemischt werden. Der Druckluftdruck kann ebenfalls in Abhängigkeit von der Kenngröße im Rahmen einer Regelung auf einen vorgegebenen Druckluftdruck-Sollwert geregelt werden, wobei der Druckluft-Istdruck von einem Druckluft-Drucksensor erfasst wird. Ein Defekt wenigstens eines der Drucksensoren kann zu einer verminderten Leistungsfähigkeit des SCR-Katalysators führen mit der Folge, dass ungereinigtes Abgas in die Umgebung gelangen kann.

Der Erfindung liegt die Aufgabe zugrunde, ein Verfahren zum Einbringen eines Reagenzmittels in einen Abgaskanal einer Brennkraftmaschine vorzuschlagen, bei denen die Einhaltung von wenigstens einem vorgegebenen Druck sichergestellt wird.

### Vorteile der Erfindung

Die erfindungsgemäße Vorgehensweise zum Einbringen eines Reagenzmittels in einen Abgaskanal einer Brennkraftmaschine, bei dem wenigstens ein Drucksensor zum Erfassen eines Drucks vorgesehen ist, sieht eine Diagnose des Drucksensors vor. In wenigstens einem ersten Zeitintervall, in welchem ein stationärer Druckzustand erwartet wird, ist eine Überprüfung vorgesehen, ob das Drucksensorsignal wenigstens näherungsweise dem stationären Druck entspricht. Weiterhin wird in wenigstens einem zweiten Zeitintervall, in welchem eine Druckänderung auftritt, überprüft, ob das Drucksensorsignal einem vorgegebenen Prüfdruck wenigstens näherungsweise entspricht und/oder eine vorgegebene Änderung gegenüber dem stationären Druck wenigstens näherungsweise aufweist. Ein Fehlersignal wird bereitgestellt, wenn wenigstens eine der Bedingungen nicht erfüllt ist.

Die erfindungsgemäße Vorgehensweise ermöglicht eine umfassende Diagnose des wenigstens einen Drucksensors, die ein ordnungsgemäßes Arbeiten des Drucksensors sicherstellt. Die vom Drucksignal abhängige Einbringung des Reagenzmittels in den Abgaskanal der Brennkraftmaschine kann durch die Einhaltung eines vorgegebenen Reagenzmitteldrucks und/oder eines vorgegebenen Druckluftdrucks optimal erfolgen, sodass eine Abgasbehandlungsvorrichtung wie beispielsweise ein SCR-Katalysator bei geringstmöglichem Reagenzmittelverbrauch ein optimales Reinigungsergebnis erzielen kann.

Ferner ist vorgesehen, dass das Fehlersignal bereitgestellt wird, wenn das Drucksignal dem stationären Druck nicht entspricht und wenn gleichzeitig das Drucksignal dem vorgegebenen Prüfdruck nicht entspricht und/oder die vorgegebene Änderung nicht aufweist. Mit dieser Ausgestaltung wird die Zuverlässigkeit der Diagnose des wenigstens einen Drucksensors erhöht. Ein irrtümliches Bereitstellen des Fehlersignals kann vermieden werden. Beispielsweise könnten ungewöhnliche Umgebungseinflüsse zum Bereitstellen des Fehlersignals führen, obwohl der Drucksensor voraussichtlich in Ordnung ist.

Vorteilhafte Weiterbildungen und Ausgestaltungen der erfindungsgemäßen Vorgehensweise ergeben sich aus abhängigen Ansprüchen.

Eine Ausgestaltung sieht vor, dass im ersten Zeitintervall ein druckloser Zustand vorliegen soll und dass überprüft wird, ob das Drucksignal wenigstens näherungsweise dem Umgebungsluftdruck entspricht. Eine alternative Ausgestaltung sieht vor, dass im ersten Zeitintervall ein vorgegebener Betriebsdruck vorliegen soll.

Eine Ausgestaltung sieht vor, dass zu einem im zweiten Zeitintervall liegenden Messzeitpunkt überprüft wird, ob das Drucksignal wenigstens näherungsweise einem Prüfdruck entspricht. Eine alternative oder zusätzliche Ausgestaltung sieht vor, dass im zweiten Zeitintervall der Differenzen-Quotient und/oder der Differenzial-Quotient des zeitlichen Verlaufs des Drucksignals ermittelt und bewertet wird.

Eine andere Ausgestaltung sieht vor, dass das zweite Zeitintervall im Nachlauf einer Steuerung liegt, während dem die Brennkraftmaschine bereits abgeschaltet ist. Diese Ausgestaltung erschließt eine erweiterte Diagnosemöglichkeit durch die Berücksichtigung eines am Ende der Betriebszeit der Brennkraftmaschine auftretenden Druckabfalls des Reagenzmitteldrucks und/oder des Druckluftdrucks.

Weitere vorteilhafte Weiterbildungen und Ausgestaltungen der erfindungsgemäßen Vorgehensweise ergeben sich aus weiteren abhängigen Ansprüchen und aus der folgenden Beschreibung.

### Zeichnung

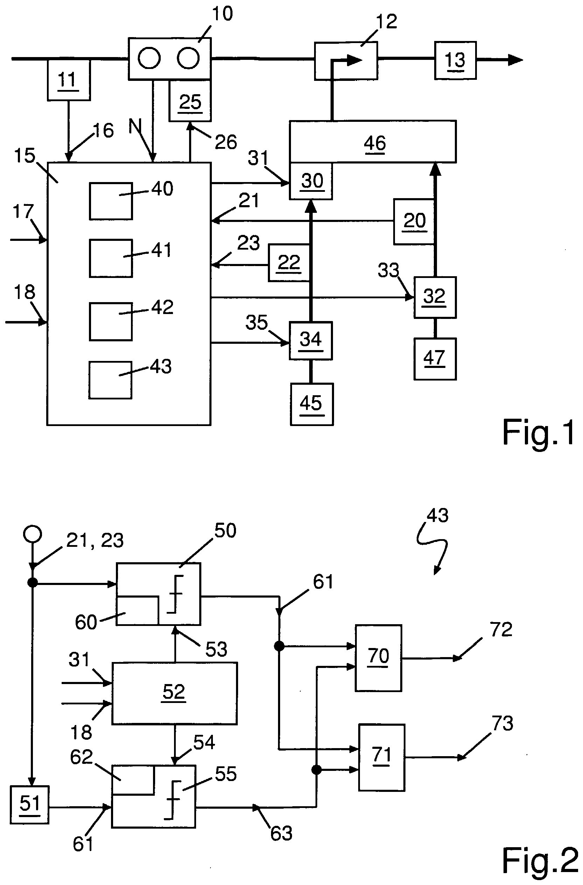

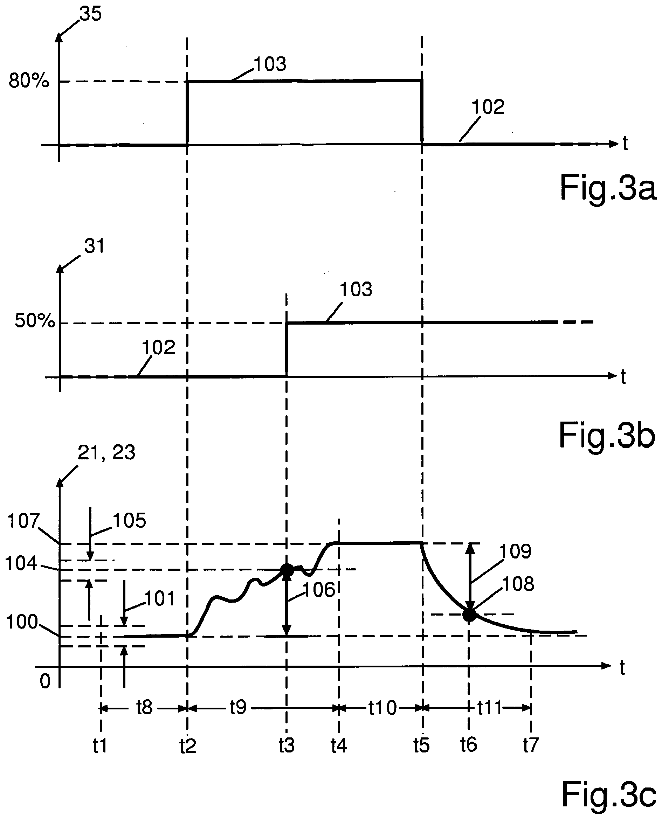

Figur 1 zeigt ein technisches Umfeld, in welchem ein erfindungsgemäßes Verfahren abläuft, Figur 2 zeigt ein Blockschaltbild einer Diagnoseeinheit und Figuren 3a - 3c zeigen Signalverläufe in Abhängigkeit von der Zeit.

Figur 1 zeigt eine Brennkraftmaschine 10, in deren Ansaugbereich ein Luftsensor 11 und in deren Abgasbereich eine Reagenzmittel-Einbringvorrichtung 12 sowie eine Abgasbehandlungsvorrichtung 13 angeordnet sind. Der Luftsensor 11 gibt an eine Steuerung 15 ein Luftsignal 16 ab. Der Steuerung 15 werden weiterhin eine von der Brennkraftmaschine 10 bereitgestellte Drehzahl N, ein Drehmoment-Sollwert 17, ein Brennkraftmaschinen-Betriebssignal 18 ein von einem Druckluft-Drucksensor 20 bereitgestelltes Druckluft-Drucksignal 21 und ein von einem Reagenzmittel-Drucksensor 22 bereitgestelltes Reagenzmittel-Drucksignal 23 zugeführt.

Die Steuerung 15 gibt an eine der Brennkraftmaschine 10 zugeordnete Kraftstoffzumessvorrichtung 25 ein Kraftstoffsignal 26, an ein Dosierventil 30 ein Dosierventil-Ansteuersignal 31, an ein Druckluftregelventil 32 ein Druckluftregelventil-Ansteuersignal 33 sowie an eine Reagenzmittelpumpe 34 ein Reagenzmittelpumpen-Ansteuersignal 35 ab.

Die Steuerung 15 enthält eine Dosierventil-Ansteuerung 40, eine Druckluftregelventil-Ansteuerung 41, eine Reagenzmittelpumpen-Ansteuerung 42 sowie eine Drucksensor-Diagnoseeinheit 43.

Das in einem Reagenzmitteltank 45 gelagerte Reagenzmittel gelangt über die Reagenzmittelpumpe 34 und über das Dosierventil 30 in eine Mischkammer 46. Der Mischkammer 46 wird weiterhin die in einem Druckbehälter 47 bereitgestellte und durch das Druckluftregelventil 32 geführte Druckluft zugeführt. Die Mischkammer 46 ist mit der Reagenzmittel-Einbringvorrichtung 12 verbunden.

Figur 2 zeigt die in der Steuerung 15 enthaltene Drucksensor-Diagnoseeinheit 43 im Detail. Das Druckluft-Drucksignal 21 und das Reagenzmittel-Drucksignal 23 - im Folgenden als Drucksignal 21, 21 bezeichnet - werden einem ersten Komparator 50 und einer Signalbewertung 51 zugeführt. Ein Zeitgeber 52 steuert mit einem ersten Zeitsignal 53 den ersten Komparator 50 und mit einem zweiten Zeitsignal 54 einen zweiten Komparator 55 an. Dem Zeitgeber 52 wird das Dosierventil-Ansteuersignal 31 und das Brennkraftmaschinen-Betriebssignal 18 zugeführt.

Der erste Komparator 50, der eine erste schaltbare Referenz 60 enthält, stellt ein erstes Fehlersignal 61 bereit. Die Signalbewertung 51 gibt ein bewertetes Drucksignal 61 an den zweiten Komparator 55 ab, der eine zweite schaltbare Referenz 62 enthält und der ein zweites Fehlersignal 63 bereitstellt.

Das erste Fehlersignal 61 wird einer Oder-Verknüpfung 70 und einer Und-Verknüpfung 71 zur Verfügung gestellt. Das zweite Fehlersignal 63 wird ebenfalls der Oder-Verknüpfung 70 und der Und-Verknüpfung 71 zugeführt. Die Oder-Verknüpfung 70 gibt ein drittes Fehlersignal 72 und die Und-Verknüpfung ein viertes Fehlersignal 72 aus.

Figur 3a zeigt das Reagenzmittelpumpen-Ansteuersignal 35 in Abhängigkeit von der Zeit t. Figur 3b zeigt das Dosierventil-Ansteuersignal 31 in Abhängigkeit von der Zeit t und Figur 3c zeigt das Drucksignal 21, 23 in Abhängigkeit von der Zeit t.

Zu einem ersten Zeitpunkt t1 weist das Drucksignal 21, 23 einen Ruhedruck 100 auf, der innerhalb eines ersten Toleranzbereichs 101 liegt.

Zu einem zweiten Zeitpunkt t2 wechselt das Reagenzmittelpumpen-Ansteuersignal von einem Ausschaltpegel 102 auf einen Einschaltpegel 103. Nach dem zweiten Zeitpunkt t2 beginnt ein Anstieg des Drucksignals 21, 23.

Zu einem dritten Zeitpunkt t3 wechselt das Dosierventil-Ansteuersignal 31 vom Ausschaltpegel 102 zum Einschaltpegel 103. Zum dritten Zeitpunkt t3 weist das Drucksignal 21, 23 einem ersten Prüfdruck 104 auf, der innerhalb eines zweiten Toleranzbereichs 105 liegt. Zum dritten Zeitpunkt t3 weist das Drucksignal 21, 23 gegenüber dem Ruhedruck 100 eine erste Druckänderung 106 auf.
Zu einem vierten Zeitpunkt t4 weist das Drucksignal 21, 23 einen Betriebsdruck 107 auf.
Zu einem fünften Zeitpunkt t5 wechselt das Reagenzmittelpumpen-Ansteuersignal vom Einschaltpegel 103 auf den Ausschaltpegel 102. Nach dem fünften Zeitpunkt t5 fällt das Drucksignal 21, 23 ab.
Zum sechsten Zeitpunkt t6 weist das Drucksignal 21, 23 einen zweiten Prüfdruck 108 auf. Gleichzeitig weist das Drucksignal 21, 23 gegenüber dem Betriebsdruck 107 eine zweite Druckänderung 109 auf.
Zum siebten Zeitpunkt t6 ist das Drucksignal 21, 23 auf dem Ruhedruck 100 abgefallen.

Zwischen dem ersten und zweiten Zeitpunkt t1, t2 liegt ein erstes Zeitintervall t8. Zwischen dem zweiten und vierten Zeitpunkt t2, t4 liegt ein zweites Zeitintervall t9. Zwischen dem vierten und fünften Zeitpunkt liegt ein weiteres erstes Intervall t10 und zwischen dem fünften und siebten Zeitpunkt t5, t7 ein weiteres zweites Zeitintervall t11.

Das erfindungsgemäße Verfahren arbeitet folgendermaßen:
Nach der Inbetriebnahme der Brennkraftmaschine 10 durch das Brennkraftmaschinen-Betriebssignal 18, das beispielsweise von einem nicht näher gezeigten Zündschloss eines Kraftfahrzeugs bereitgestellt wird, legt die Steuerung 15 in Abhängigkeit von wenigstens einem Eingangssignal das Kraftstoffsignal 26 fest. Als Eingangssignal ist beispielsweise das vom Luftsensor 11 bereitgestellte Luftsignal 16 und/oder die von der Brennkraftmaschine 10 bereitgestellte Drehzahl N und/oder der von einer Position eines nicht näher gezeigten Fahrpedals abgeleitete Drehmoment-Sollwert 17 vorgesehen.

Das Kraftstoffsignal 26 legt beispielsweise eine Einspritzdauer von nicht näher gezeigten Kraftstoffventilen fest, die in der Kraftstoffzumessvorrichtung 25 angeordnet sind.

Das Abgas der Brennkraftmaschine 10 wird in der Abgasbehandlungsvorrichtung 13 von wenigstens einer Abgaskomponente gereinigt. Bei der Abgasbehandlungsvorrichtung 13 handelt es sich beispielsweise um einen Katalysator und/oder ein Partikelfilter. Im gezeigten Ausführungsbeispiel wird von einem Katalysator ausgegangen, der insbesondere als SCR-Katalysator (Selektive-Catalytic-Reduction) ausgebildet ist. Der SCR-Katalysator 13 konvertiert beispielsweise die im Abgas enthaltenen Stickoxide mit Ammoniak zu Wasser und Stickstoff. Das Ammoniak kann unmittelbar in den Abgasbereich stromaufwärts des SCR-Katalysators 13 eingebracht werden. Im gezeigten Ausführungsbeispiel wird davon ausgegangen, dass die Reagenzmittel-Einbringvorrichtung 12 vorgesehen ist, die eine Harnstoff-Wasser-Lösung als Reagenzmittel in den Abgasbereich stromaufwärts des SCR-Katalysators 13 einbringt. Das Ammoniak wird im Abgas stromaufwärts des SCR-Katalysators 13 und insbesondere innerhalb des SCR-Katalysators 13 durch Hydrolyse erhalten.

Die als Reagenzmittel vorgesehene Harnstoff-Wasser-Lösung wird im Reagenzmitteltank 45 gelagert, von der Reagenzmittelpumpe 34 wenigstens näherungsweise auf einen vorgegebenen Reagenzmittel-Solldruck gebracht und über das Dosierventil 30 der Mischkammer 46 zugeführt. Die Mischkammer 46 kann entfallen, wenn dem Reagenzmittel keine Druckluft zugemischt wird. In diesem Fall kann das Dosierventil 30 mit der Reagenzmittel-Einbringvorrichtung 12 zusammenfallen. Im gezeigten Ausführungsbeispiel wird davon ausgegangen, dass in der Mischkammer 46 das Reagenzmittel mit Druckluft vermischt wird, die im Druckbehälter 47 bereitgestellt wird. Der Druckluftdruck wird mit dem Druckluftregelventil 32 wenigstens näherungsweise auf einen vorgegebenen Druckluft-Solldruck gebracht.

Sowohl der Reagenzmitteldruck als auch der Druckluftdruck werden von Drucksensoren 20, 22 erfasst. Der Reagenzmittel-Drucksensor 22 stellt das Reagenzmittel-Drucksignal 23 und der Druckluft-Drucksensor 20 das Druckluft-Drucksignal 21 bereit, die im Folgenden wieder als Drucksignal 21, 23 bezeichnet werden. Bei der Inbetriebnahme der Brennkraftmaschine 10 mit dem Brennkraftmaschinen-Betriebssignal 18 wird vorzugsweise das Reagenzmittelpumpen-Ansteuersignal 35 von der Reagenzmittelpumpen-Ansteuerung 42 bereitgestellt. Die Reagenzmittelpumpe 34 bringt das Reagenzmittel auf einen vorgegebenen Druck von beispielsweise 4 bar. Die Reagenzmittelpumpen-Ansteuerung 42 kann eine Regelung enthalten, der als Druck-Istwert das Reagenzmittel-Drucksignal 23 zur Verfügung gestellt wird. Die Reagenzmittelmenge wird mit dem Dosierventil 30 vorgegeben, das die Dosierventil-Ansteuerung 40 mit dem Dosierventil-Ansteuersignal 31 beaufschlagt, das beispielsweise einen vorgegebenen Querschnitt des Dosierventils 30 freigibt.

Die Druckluft, die gegebenenfalls in der Mischkammer 46 dem Reagenzmittel zugemischt wird, wird ebenfalls vorzugsweise auf einen vorgegebenen Druckluft-Solldruck geregelt. Die Druckluftregelventil-Ansteuerung 41 legt hierzu in Abhängigkeit vom Druckluftsensor-Drucksignal 21 das Druckluftregelventil-Ansteuersignal 33 fest. Der Druckluft-Solldruck beträgt beispielsweise 8 bar. Der Druckbehälter 47 ist in einem Kraftfahrzeug zum Betreiben einer Bremsanlage und/oder einer hilfskraftunterstützten Lenkung und/oder sonstigen Verstellantrieben gegebenenfalls vorhanden. Eventuell ist ein Kompressor einzusetzen. Der Druckluftdruck kann vor dem Mischer 46 beispielsweise mit einer nicht näher gezeigten überkritischen Drossel und/oder durch den Druckverlust eines nicht näher gezeigten Rückschlagventils auf beispielsweise 4 bar vermindert werden.

Eine Fehlfunktion oder ein vollständiger Ausfall des Reagenzmittel-Drucksensors 22 und/oder des gegebenenfalls vorgesehenen Luftdruck-Drucksensors 20 hat einen Einfluss auf die Abgasbehandlung, da der Druck die Reagenzmittelmenge und die räumliche Verteilung im Abgaskanal stromaufwärts des SCR-Katalysators 13 mitbestimmt. Eine Überdosierung kann zu einem Ammoniakdurchbruch führen. Eine Unterdosierung hat zur Folge, dass die Abgasbehandlungsvorrichtung 13 ihre Reinigungsfunktion nicht mehr vollständig erfüllen kann.

Vorgesehen ist deshalb die Diagnose des Reagenzmittel-Drucksensors 22 und des gegebenenfalls vorgesehenen Druckluft-Drucksensors 20. Die Diagnose wird anhand der Drucksignale 21, 23 in der Drucksensor-Diagnoseeinheit 43 durchgeführt, deren Aufbau im Detail in Figur 2 gezeigt ist.

Die wesentliche Vorgehensweise sieht zunächst vor, dass in wenigstens einem ersten Zeitintervall t8, t10, in welchem mit dem Vorliegen entweder des Ruhedrucks 100 oder des Betriebsdrucks 107 ein stationärer Druckzustand erwartet wird, überprüft wird, ob das Drucksignal 21, 23 wenigstens näherungsweise dem stationären Druck 100, 107 entspricht. Zusätzlich wird in wenigstens einem zweiten Zeitintervall t9, t11, in welchem eine Druckänderung auftritt, überprüft, ob das Drucksignal 21, 23 einen vorgegebenen Prüfdruck wenigstens näherungsweise entspricht und/oder eine erwartete Druckänderung 106, 109 wenigstens näherungsweise aufgetreten ist. Das dritte und/oder vierte Fehlersignal 72, 73 wird bereitgestellt, wenn wenigstens eine der Bedingungen nicht erfüllt ist.

Die Diagnosevorgänge werden vom Zeitgeber 52 in Abhängigkeit vom Brennkraftmaschinen-Betriebssignal 18 und Dosierventil-Ansteuersignal 31 gesteuert. Der Zeitgeber 52 gibt zwischen dem ersten und zweiten Zeitpunkt t1, t2, entsprechend dem ersten Zeitintervall t8, das erste Zeitsignal 53 an den ersten Komparator 50 ab, der das Drucksignal 21, 23 daraufhin überprüft, ob der Ruhedruck 100 wenigstens näherungsweise vorliegt. Der erste Komparator 50 vergleicht das Drucksignal 21, 23 mit dem von der ersten schaltbaren Referenz 60 bereitgestellten Referenzwert, der beispielsweise dem Umgebungsluftdruck entspricht. Der erste Toleranzbereich 101 wird derart festgelegt, dass zulässige Toleranzen nicht dazu führen, dass der erste Komparator 50 das erste Fehlersignal 61 aufgrund einer Überschreitung des Referenzwerts bereitstellt.

Alternativ oder zusätzlich kann vorgesehen sein, dass der Zeitgeber 52 den ersten Komparator 50 zwischen dem vierten und sechsten Zeitpunkt t4, t6, entsprechend dem weiteren ersten Zeitintervall t10, mit dem ersten Zeitsignal 53 ansteuert. In dem weiteren ersten Zeitintervall t10 überprüft der erste Komparator 50, ob das Drucksignal 21, 23 wenigstens näherungsweise den Betriebsdruck 107 aufweist. In diesem Fall wird mit dem ersten Zeitsignal 53 die erste schaltbare Referenz 60 zur Ausgabe eines anderen Referenzwertes umgeschaltet, der ein Maß für den Betriebsdruck 107 ist.

Wenn in wenigstens einem ersten Zeitintervall t8, t10 eine Abweichung des Drucksignals 21, 23 vom Ruhedruck 100 oder Betriebsdruck 107 festgestellt wurde, tritt das erste Fehlersignal 61 auf, das über die Oder-Verknüpfung 70 unmittelbar als drittes Fehlersignal 72 ausgegeben wird. Das dritte Fehlersignal 72 kann beispielsweise angezeigt und/oder in einen nicht näher gezeigten Fehlerspeicher hinterlegt werden.

Zwischen dem zweiten und vierten Zeitpunkt t2, t4, entsprechend dem zweiten Zeitintervall t9, und zwischen dem fünften und siebten Zeitpunkt t5, t7, entsprechend dem weiteren zweiten Zeitintervall t11, stellt der Zeitgeber 52 das zweite Zeitsignal 54 zur Ansteuerung des zweiten Komparators 55 bereit.

Gemäß einer ersten Ausgestaltung ist vorgesehen, dass der zweite Komparator 55 das von der Signalbewertung 51 bewertete Drucksignal 61 mit einem von der zweiten schaltbaren Referenz 62 bereitgestellten Referenzwert vergleicht. Die Signalbewertung 51 bildet beispielsweise den im zweiten Zeitintervall t9 oder im weiteren zweiten Zeitintervall t11 auftretenden Differenzial-Quotienten des Drucksignals 21, 23. Eine technisch durchführbare Möglichkeit sieht wenigstens eine Ermittlung des Differenzen-Quotienten des Drucksignals 21, 23 vor. Das der Ermittlung des Differenzen-Quotienten zugrunde zu legende Zeitintervall ist im Hinblick auf das erwartete Verhalten des zeitlichen Verhaltens des Sensorsignals 21, 23 abzustimmen, da gemäß dem in Figur 3c gezeigten Verlauf des Drucksignals 21, 23 lokale Maxima und Minima auftreten können.

Alternativ oder zusätzlich kann vorgesehen sein, dass der Zeitgeber 52 zu einem festgelegten Zeitpunkt innerhalb des zweiten Zeitintervalls t9 bzw. des weiteren zweiten Zeitintervalls t11 das zweite Zeitsignal 54 bereitstellt. Im gezeigten Ausführungsbeispiel wird das zweite Zeitsignal 54 zum dritten Zeitpunkt t3 und/oder zum sechsten Zeitpunkt t6 bereitgestellt. Zum dritten Zeitpunkt t3 wechselt das Dosierventil-Ansteuersignal 31 vom Ausschaltpegel 102 zum Einschaltpegel 103. Zum dritten Zeitpunkt t3 wird deshalb davon ausgegangen, dass der Betriebsdruck 107 weitgehend erreicht ist. Tatsächlich liegt der erste Prüfdruck 104 vor.

Gemäß einer ersten Ausgestaltung kann vorgesehen sein, dass der zweite Komparator 55 zum dritten Zeitpunkt t3 überprüft, ob der vorgegebene erste und/oder zweite Prüfdruck 104, 108 vorliegt. Bei dieser Ausgestaltung entfällt die Signalbewertung 51, weil der zweite Komparator 55 unmittelbar das Drucksignal 21, 23 mit dem von der zweiten schaltbaren Referenz 62 bereitgestellten Referenzwert vergleicht, der ein Maß für den ersten Prüfdruck 104 zum dritten Zeitpunkt t3 bzw. ein Maß für den zweiten Prüfdruck 108 zum sechsten Zeitpunkt t6 ist. Der zweite Toleranzbereich 105 ist an den zum dritten Zeitpunkt t3 erwarteten ersten Prüfdruck 104 und an den zum sechsten Zeitpunkt t6 erwarteten zweiten Prüfdruck 108 anzupassen.

Gemäß einer anderen Ausgestaltung kann vorgesehen sein, dass der zweite Komparator 55 überprüft, ob die vorgegebene erste Druckänderung 106 zum dritten Zeitpunkt t3 und/oder die zweite Druckänderung 109 zum sechsten Zeitpunkt t6 vorliegt. Bei dieser Ausgestaltung ist die Signalbewertung 51 erforderlich, welche zum dritten Zeitpunkt die Differenz zwischen dem aktuell vorliegenden Drucksignal 21, 23 und dem Ruhedruck 100 und zum sechsten Zeitpunkt die Differenz zwischen dem aktuell vorliegenden Drucksignal 21, 23 und dem zum fünften Zeitpunkt t5 vorliegenden Betriebsdruck 107 ermittelt.

Das vom zweiten Komparator 55 bereitgestellte zweite Fehlersignal 63, das einen im zweiten Zeitintervall t9 und/oder im weiteren zweiten Zeitintervall t11 aufgetretenen Fehler signalisiert, wird über die Oder-Verknüpfung 70 unmittelbar als drittes Fehlersignal 72 ausgegeben. Die Oder-Verknüpfung 70 gibt das dritte Fehlersignal 72 aus, wenn das erste Fehlersignal 61 oder das zweite Fehlersignal 63 oder beide Fehlersignale 61, 63 auftreten. Das vierte Fehlersignal 73 wird von der Und-Verknüpfung 71 ausgegeben, wenn sowohl das erste Fehlersignal 61 als auch das zweite Fehlersignal 63 vorliegt. Aufgrund der zeitlichen Abfolge der einzelnen Intervalle t8, t9, t10, t11 ist eine nicht näher gezeigte Speicherung der Fehlersignale 61, 63 vorzusehen.

## Patentansprüche

1. Verfahren zur Diagnose eines Drucksensors (22), das in einem Verfahren zum Einbringen eines Reagenzmittels in einen Abgaskanal einer Brennkraftmaschine (10) durchgeführt wird, wobei der Drucksensor (22) den Druck des Reagenzmittels erfasst, **dadurch gekennzeichnet, dass** in wenigstens einem ersten Zeitintervall (t8, t10), in welchem mit dem Vorliegen eines Ruhedrucks (100) oder eines Betriebsdrucks (107) ein stationärer Druckzustand erwartet wird, überprüft wird, ob das vom Drucksensor (22) bereitgestellte Drucksignal (23) dem Ruhedruck (100) oder dem Betriebsdruck (107) entspricht, dass in wenigstens einem zweiten Zeitintervall (t9, t11), in welchem eine Druckänderung auftritt, überprüft wird, ob das Drucksignal (23) eine vorgegebene Änderung gegenüber dem Ruhedruck (100) oder dem Betriebsdruck (107) aufweist, und dass ein Fehlersignal (72) bereitgestellt wird, wenn die im ersten und die im zweiten Intervall (t8, t10; t9, t11) vorgegebene Bedingung nicht erfüllt ist.

2. Verfahren nach Anspruch 1, **dadurch gekennzeichnet, dass** im zweiten Zeitintervall (t9, t11) der Differenzen-Quotient und/oder der Differenzial-Quotient des zeitlichen Verlaufs des Drucksignals (23) ermittelt und bewertet wird.

3. Verfahren nach Anspruch 1, **dadurch gekennzeichnet, dass** das zweite Zeitintervall (t9, t11) im Nachlauf einer Steuerung (15) liegt, während dem die Brennkraftmaschine (10) bereits abgeschaltet ist.

## Claims

1. Method for diagnosing a pressure sensor (22), which method is carried out in a method for introducing a reagent into an exhaust duct of an internal combustion engine (10), wherein the pressure sensor (22) senses the pressure of the reagent, **characterized in that** in at least one first time interval (t8, t10) in which a steady-state pressure condition is expected when a rest pressure (100) or an operating pressure (107) is present, it is checked whether the pressure signal (23) which is made available by the pressure sensor (22) corresponds to the rest pressure (100) or to the operating pressure (107), **in that** in at least one second time interval (t9, t11) in which a change in pressure occurs, it is checked whether the pressure signal (23) exhibits a predefined change with respect to the rest pressure (100) or the operating pressure (107), and **in that** a fault signal (72) is made available if the condition which is predefined in the first interval and in the second interval (t8, t10; t9, t11) is not satisfied.

2. Method according to Claim 1, **characterized in that** in the second time interval (t9, t11) the difference quotient and/or the differential quotient of the chronological profile of the pressure signal (23) is determined and evaluated.

3. Method according to Claim 1, **characterized in that** the second time interval (t9, t11) lies in the run-on of a controller (15) during which the internal combustion engine (10) is already switched off.

## Revendications

1. Procédé de diagnostic d'un capteur de pression (22) qui est mis en oeuvre dans un procédé d'introduction d'un réactif dans un conduit de gaz d'échappement d'un moteur à combustion interne (10), le capteur de pression (22) détectant la pression du réactif, **caractérisé en ce que** dans au moins un premier intervalle de temps (t8, t10) dans lequel un état de pression stationnaire est attendu en présence d'une pression de repos (100) ou d'une pression de fonctionnement (107), on vérifie si le signal de pression (23) fourni par le capteur de pression (22) correspond à la pression de repos (100) ou à la pression de fonctionnement (107), **en ce que** dans au moins un deuxième intervalle de temps (t9, t11) dans lequel se produit une variation de pression, on vérifie si le signal de pression (23) présente une variation prédéfinie par rapport à la pression de repos (100) ou à la pression de fonctionnement (107) et **en ce qu'**un signal d'erreur (72) est fourni si la condition prédéfinie dans le premier et, respectivement dans le deuxième intervalle (t8, t10 ; t9, t11) n'est pas satisfaite.

2. Procédé selon la revendication 1, **caractérisé en ce que** dans le deuxième intervalle de temps (t9, t11), le quotient des différences et/ou le quotient différentiel de l'allure dans le temps du signal de pression (23) est déterminé et analysé.

3. Procédé selon la revendication 1, **caractérisé en ce que** le deuxième intervalle de temps (t9, t11) est situé après une commande (15), intervalle de temps au cours duquel le moteur à combustion interne (10) est déjà arrêté.
